# EUROPÄISCHE PATENTSCHRIFT

(11) **EP 0 648 234 B1**
(45) Veröffentlichungstag und Bekanntmachung des Hinweises auf die Patenterteilung: **22.09.1999**
(21) Anmeldenummer: 93914735.1
(22) Anmeldetag: 26.06.1993
(51) Int. Cl.: C08F 220/04, C08F 251/00

(54) **PFROPF-COPOLYMERISATE VON UNGESÄTTIGTEN MONOMEREN UND ZUCKERN, VERFAHREN ZU IHRER HERSTELLUNG UND IHRE VERWENDUNG**
GRAFT COPOLYMERS OF UNSATURATED MONOMERS AND SUGARS, PROCESS FOR PRODUCING THE SAME AND THEIR USE
COPOLYMERES GREFFES DE MONOMERES INSATURES ET DE SUCRES, LEUR PROCEDE DE FABRICATION ET LEUR UTILISATION

(30) Priorität: 02.07.1992 DE 4221381
(43) Veröffentlichungstag der Anmeldung: 19.04.1995
(73) Patentinhaber: Stockhausen GmbH & Co. KG, 47805 Krefeld (DE)
(72) Erfinder: KRAUSE, Frank, D-4190 Kleve 1 (DE); KLIMMEK, Helmut, D-4150 Krefeld (DE)
(74) Vertreter: Wolff, Felix, Dr.
(86) Internationale Anmeldenummer: EP9301642
(87) Internationale Veröffentlichungsnummer: WO9401476

(56) Entgegenhaltungen:
- EP-A- 0 289 895
- EP-A- 0 324 985
- EP-A- 0 441 197

## Beschreibung

Gegenstand der Erfindung sind wasserlösliche, saure Gruppen enthaltende Pfropfcopolymerisate mit einer zumindest teilweisen biologischen Abbaubarkeit auf der Basis von Zuckern und monoethylenisch ungesättigten Carbon- und Sulfonsäuren sowie ggf. weiteren Monomeren, Verfahren zu ihrer Herstellung sowie ihre Verwendung in wäßrigen Systemen. Dazu zählen z. B. die Inhibierung der negativen Auswirkungen von Wasserhärte, die dispergierende Wirkung auf Pigmente, der Einsatz in Wasch- und Färbeflotten, sowie die Verwendung als Hilfsmittel bei der Papier- und Lederherstellung.

Bei diesen Anwendungen der wasserlöslichen Polymere kommt es darauf an, mehrwertige Metallionen zu komplexieren, Härtebildner des Wassers am Ausfallen zu hindern oder Pigmente in hoher Konzentration bei niedriger Viskosität zu dispergieren.

Um die ökologische Akzeptanz wasserlöslicher Polymere zu erhöhen, wurde immer wieder versucht, biologisch abbaubare Produkte herzustellen. Die für die o. g. Anwendungen im technischen Einsatz befindlichen Polymeren sind in der Regel gering bis gar nicht abbaubar und werden in den Kläranlagen durch Adsorption an den Klärschlamm weitgehend fixiert und so aus dem wässrigen System eliminiert. (Siehe dazu H. J. Opgenorth in Tenside Surfactants Detergents 24 (1987) 366-369, "Umweltverträglichkeit von Polycarboxylaten".)

Polysaccharide stellen hinsichtlich ihrer biologischen Abbaubarkeit ideale Polymere dar, jedoch sind die anwendungstechnischen Eigenschaften ungenügend. Es hat deshalb Bemühungen gegeben, den Polysacchariden durch Modifizierung ein verbessertes Eigenschaftsniveau zu geben, so beschreibt z. B. die EP 0 427 349 A2 die Einführung von Carboxylgruppen durch Oxidation.

Das Calcium-Bindevermögen des so modifizierten Polysaccharids erfährt dadurch eine Verbesserung, erreicht aber bei weitem nicht das Niveau synthetischer Polycarboxylate. Mit dem Gewinn an Calcium-Bindevermögen verliert das Polysaccharid andererseits jedoch einen Teil seiner ursprünglich vorhandenen biologischen Abbaubarkeit. Ein alternativer Weg für die Synthese von zumindest teilweise abbaubaren wasserlöslichen Polymeren ist die Pfropfcopolymerisation von Kohlenhydraten und ungesättigten carboxylgruppenhaltigen Monomeren.
Aus der DE 37 14 732 C2 sind Copolymerisate ungesättigter Carbonsäuren mit alkalischen Lösungen zur Enolatbildung befähigter Monosaccharide bekannt, die teilweisen biologischen Abbau aufweisen und deren CaCO₃-Bindevermögen im Rahmen handelsüblicher Polyacrylate liegen soll. Als zur Enolatbildung befähigte Monosaccharide werden in erster Linie Glucose, Fructose, Mannose, Maltose, Xylose und Galactose erwähnt. Das Herstellungsverfahren ist technisch aufwendig und kompliziert, da nicht die Original- Polymerisatlösung, sondern der sich durch saure Fällung ergebende Niederschlag das Endprodukt des Herstellungsverfahrens darstellt. Aus dem Vergleichsbeispiel 1 dieser vorliegenden Schrift geht hervor, daß das gefällte Polymerisat nicht in einer leicht abzutrennenden festen Form anfällt. sondern als schleimiger, schwer zu isolierender Niederschlag.

Die DE 38 34 237 A1 beschreibt den Einsatz von synthetisch aus Saccharose und Fructose herstellbaren Zuckern, der Palatinose und/oder Leukrose, nach dem Polymerisationsverfahren der DE 37 14 732 C2. Die Verwendung des preiswerten und technisch in großen Mengen verfügbaren Disaccharids Saccharose wird nach dem Verfahren der o. g. Patent/Offenlegungsschriften explizit ausgeschlossen.

Aus der DE 40 03 172 A1 sind radikalisch initiierte Pfropf-Copolymerisate aus Mono-, Oligo- bzw. Polysacchariden mit einer Kombination aus ungesättigten Mono- und Dicarbonsäuren als Waschmitteladditive bekannt, die zumindest eine teilweise biologische Abbaubarkeit aufweisen sollen. Darüber hinaus werden den Pfropfpolymerisaten vergleichbare bis bessere inkrustationsinhibierende Wirkungen in Textilwaschmitteln zugeschrieben als sie von den saccharidfreien Polymeren aus ungesättigten Mono- und Dicarbonsäuren bekannt sind und beispielsweise in der EP 0 025 551 B1 beschrieben werden. Die als Rezepturbestandteil der DE 40 03 172 A1 vorgeschriebenen Dicarbonsäuren zeigen neben ihrer, dem Fachmann hinlänglich bekannten, schweren Polymerisierbarkeit noch einen weiteren Nachteil, der sich in einem teilweisen Verlust an Carboxylgruppen durch den Austritt von Kohlendioxid während der Polymerisation zeigt. Diese Kohlendioxidabspaltung ist in der Literatur beschrieben von BRAUN in Makromol. Chemie 96 (1966) 100-121 und TATE in Makromol. Chemie 109 (1967) 176-193 und bedeutet für das Verfahren einen ökonomischen Verlust. Außerdem wird die Effektivität des Polyelektrolyten durch den teilweisen Verlust der Carboxylgruppen gestört. Weiterhin ist der
DE 40 03 172 A1 zu entnehmen, daß bei dem Einsatz von Polysacchariden eine zeitraubende saure Hydrolyse vor der Polymerisation erforderlich ist, um ihnen eine ausreichende Löslichkeit zu verleihen und daß die erfindungsgemäßen Polymerisate häufig trüb anfallen, was erfahrungsgemäß nach längerer Lagerung zu einem Absetzen der Trübe im Produkt und damit zu einer Inhomogenität führt.

In der japanischen Patentantragsveröffentlichung JP-A-61-31497 wird die Verwendung eines Pfropfpolymers als biologisch abbaubare Waschmittelkomponente beschrieben. Diese Pfropfpolymere sind aus Polysacchariden vom Typ Stärke oder Dextrin oder Cellulose und wasserlöslichen Monomeren aufgebaut, wobei unter den wasserlöslichen Monomeren diejenigen mit Carboxylgruppen und unter diesen wiederum (Meth)Acryl-, Itacon-, Malein- oder Fumarsäure eindeutig bevorzugt werden. In den Anwendungsbeispielen werden Pfropfpolymere aus Dextrin und Acrylsäure beschrieben, die Dextringehalte von 67 bis 34 Gew% aufweisen. Die biologische Abbaubarkeit wurde entsprechend den MITI-Richtlinien getestet und bewegte sich zwischen 42 und 10 %, d. h. sie lag noch unter dem Gehalt an Naturstoff im Pfropfpolymerisat. Bezüglich des Calciumbindevermögens und der Beständigkeit gegen Hartwasser werden keine Angaben gemacht. Die Waschkraft eines dieser Pfropfpolymeren enthaltenden Waschmittels war, trotz einer sehr hohen Einsatzmenge von 20 Gew% Pfropfpolymer, nur auf dem Niveau eines Vergleichs-Waschmittels mit der dem Pfropfpolymer entsprechenden Menge an Zeolith.

In der EP 0 465 287 A1 wird eine Waschmittelkomposition beschrieben, die u. a. ein Pfropfpolymer als Builder enthält, der aus synthetischer Polydextrose und einem ungesättigtem wasserlöslichen Monomer aufgebaut ist. Ausdrücklich hevorzugt werden die Monomeren (Meth)Acrylsäure bzw. in Kombination mit Malein- oder Itaconsäure. In den Beispielen werden lediglich Pfropfpolymere aus Polydextrose und Acrylsäure aufgeführt und bei einem Waschversuch wurde im Vergleich zu Zeolith eine um 46 % verminderte Inkrustation gefunden. Dieses Ergebnis ist deutlich schlechter als die Resultate der Waschversuche mit den Pfropfpolymerisaten gemäß DE 40 03 172 A1, wo Inkrustationsinhibierungen von bis zu 57 % erreicht wurden.
Demzufolge sind die Pfropfpolymerisate nach EP 0 465 287 A1 und nach JP-A-61-31497 in Waschprozessen weniger wirksam als die nach DE 40 03 172 A1. Für eine vergleichende Beurteilung des Calciumbindevermögens oder etwa der Inhibierung von Hartwasserbestandteilen der beschriebenen Pfropfpolymere fehlen vergleichbare Daten. Da aber z. B. beide Eigenschaften bei Waschversuchen mit von Bedeutung sind, dürften die Polymere nach DE 40 03 172 A1 auch darin besser sein.

Der vorliegenden Erfindung liegt die Aufgabe zugrunde, in einem einfachen technischen Verfahren unter Vermeidung decarboxylierender Monomerer klar wasserlösliche, saccharidhaltige Pfropfcopolymere herzustellen, die eine verbesserte biologische Abbaubarkeit aufweisen und eine erhöhte Effizienz bezüglich der mehrwertige Metallionen komplexierenden Eigenschaften gegenüber dem Stand der Technik zeigen sowie gute Inhibitoren für Wasserhärte sind und dispergierende Eigenschaften für Stoffe in wäßrigen Systemen haben.

Diese Aufgabe wird erfindungsgemäß gelöst durch Pfropf-Copolymerisate erhältlich durch radikalische Pfropf-Copolymerisation von 40 bis 95 Gew.% einer Mischung aus den Monomerkomponenten A) bis E) und 5 bis 60 Gew.% von Monosacchariden, Disacchariden, Oligosacchariden oder Sorbit, Mannit, Gluconsäure, Glukuronsäure, Alkylglykoside, Alkyl-, Hydroxyalkyl- oder Carboxyalkylether als Reaktionsprodukte bzw. Derivate der Saccharide oder Mischungen davon, wobei die Monomermischung aus
A) 36,95 bis 96 Gew.% wenigstens einer monoethylenisch ungesättigten C₃-C₁₀-Monocarbonsäure und/oder deren Salz mit einwertigem Kation oder Mischungen von monoethylenisch ungesättigten C₃-C₁₀-Monocarbonsäuren und/oder deren Salze mit einwertigen Kationen;
B) 4 bis 55 Gew.% wenigstens eines monoethylenisch ungesättigten sulfonsäuregruppenhaltiger Monomeren, eines monoethylenisch ungesättigten Schwefelsäureesters und/oder Vinylphosphonsäure und/oder deren Salze mit einwertigen Kationen;
C) 0 bis 30 Gew.% wenigstens eines wasserlöslichen, monoethylenisch ungesättigten Polyalkylenglykolethers von (Meth)allylalkohol oder Polyalkylenglykolester von (Meth)acrylsäure, der gegebenenfalls endverschlossen sein kann und 2 bis 50 MolAlkylenoxideinheiten pro Mol (Meth)acrylsäure oder (Meth)allylalkohol enthält;
D) 0 bis 45 Gew.% wenigstens einer weiteren wasserlöslichen, radikalisch polymerisierbaren Verbindung oder einer Verbindung, die entweder wenigstens zwei ethylenisch ungesättigte Doppelbindungen oder eine ethylenisch ungesättigte Doppelbindung sowie eine andere funktionell vernetzend wirkende Gruppe enthält;
E) 0 bis 30 Gew.% in Wasser wenig bzw. unlöslicher, radikalisch polymerisierbarer Alkyl und/oder Hydroxylalkyl(meth-)acrylsäureester, Maleinsäuremono- und/oder dialkylester, N-Alkyl- und/oder N,N'-dialkyl(meth-)acrylamide und/oder Vinylcarbonsäureester besteht, und die Summe aus A bis E 100 Gew.% beträgt.

Zucker sind erfindungsgemäß mono-, di- und oligomere Verbindungen aus Zuckereinheiten, wie sie z. B. die natürlich vorkommenden Verbindungen Saccharose, Glucose und Fructose und deren Mischungen als auch die sauren und enzymatischen Verzukkerungsprodukte der Polysaccharide, die Mischungen aus Mono-, Di- und Oligosacchariden darstellen. Aufgrund der Verfügbarkeit und des Preises sind vor allem Saccharose, Glucose, Fructose und Stärkeverzuckerungsproprodukte bevorzugt. Weiterhin können als Zucker auch aus Sacchariden erhaltene Reaktionsprodukte, wie Sorbit, Mannit, Gluconsäure und Glucoronsäure sowie Alkylglycoside, Alkyl-, Hydroxyalkyl- oder Carboxyalkylether und andere Derivate der genannten Mono-, Di- oder Oligosaccharide oder Mischungen dieser genannten Stoffe verwendet werden. Die Oligosaccharide weisen einen mittleren Polymerisationsgrad von 1,1 bis 20, vorzugsweise von 1,1 bis 6 auf.
Für die unter A) genannten monoethylenisch ungesättigten C3- bis C10-Monocarbonsäuren kommen Acrylsäure, Vinylessigsäure, 3-Vinylpropionsäure, Methacrylsäure, Crotonsäure, Dimethacrylsäure, 2-Pentensäure, 3-Hexensäure und 2-Hexensäure, deren Alkali- bzw. Ammonium- bzw. Aminsalze sowie entsprechende Mischungen in Frage.

Bevorzugt sind Methacrylsäure, Acrylsäure und Vinylessigsäure, besonders bevorzugt sind Acrylsäure und Methacrylsäure.

Bei den in der Gruppe B) genannten sulfonsäurehaltigen Monomeren und monoethylenisch ungesättigten Schwefelsäureestern sind insbesondere Vinyl-, Allyl- und Methallylsulfonsäure und Acrylamidomethylpropansulfonsäure, Styrolsulfonsäure sowie Schwefelsäureester des Hydroxyethyl(meth)acrylats oder von olefinisch ungesättigten Alkoholen, wie z.B. Allyl- und Methallylsulfat und/oder deren Salze (gemäß Definition in A)) bevorzugt.

Die unter C) genannten Monomere sind Polyglykolether- und/oder Ester von (Meth)Acrylsäure und (Meth)Allylalkohol, die gegebenenfalls endverschlossen sein können, beispielhaft seien hier ein mit 10 Mol Äthylenoxid verätherter Allylalkohol und ein Methoxypoly(ethylenglykol)methacrylat mit 20 Ethylenoxideinheiten genannt.

Die unter D) genannten Monomere haben aufgrund ihrer Funktionalität einen das Molekulargewicht erhöhenden Charakter, was durch einen höheren Polymerisationsgrad bzw. durch Verzweigungen und Vernetzungen erreicht wird. Geeignet sind somit gut polymerisierbare Monomere und solche mit zwei oder mehreren ethylenischen Doppelbindungen, die als bifunktionelle Vernetzer wirken oder auch Monomere mit einer ethylenisch ungesättigten Doppelbindung und einer anderen funktionellen Gruppe. Beispiele hierfür sind Acrylamid, Allylmethacrylat und Glycidylmethacrylat.
Als Monomere nach E) kommen Alkyl- und/oder Hydroxyalkyl(meth)acryläureester, Maleinsäuremono- und -dialkylester sowie N-Alkyl- und N,N-Dialkyl-(meth)acrylamide und Vinylcarbonsäureester in Frage. z.B Methyl-, Ethyl- und Butyl(meth)-acrylate, die entsprechenden Hydroxyethyl-, -propyl-, -butyl-(meth)acrylate, N-Methyl-, N-Dimethyl-, N-tert.-Butyl- und N-Octadecylacrylamid sowie Maleinsäuremono- und -diethylester sowie Vinylacetat und Vinylpropionat, sofern die damit hergestellten Copolymere wasserlöslich sind.

Die erfindungsgemäßen Polymere können nach an sich bekannten Polymerisationsmethoden in Lösung oder Suspension erhalten werden.
Vorzugsweise wird die Polymerisation der Monomeren in wäßriger Lösung durchgeführt. Die Initiierung der Polymerisation erfolgt mit Hilfe von in Radikale zerfallenden Polymerisationsinitiatoren. Verwendet werden können Redoxsysteme und thermisch zerfallende Radikalbildner bzw. Kombinationen daraus, aber auch durch Strahlen initiierbare Katalysatorsysteme.
Als Initiatoren eignen sich vor allem Peroxide, wobei Wasserstoffperoxid bzw. dessen Kombination mit Salzen der Peroxidischwefelsäure bevorzugt sind. Die Initiatoren werden kombiniert mit an sich bekannten Reduktionsmitteln, wie z. B. Natriumsulfit, Hydrazin, Schwermetallsalzen u. a.. Das Initiatorsystem kann je nach Durchführung der Polymerisation kontinuierlich dosiert oder in Portionen oder bei wechselnden pH-Werten zugefügt werden. Die Molekulargewichte können in bekannter Weise durch Regler, wie z. B. Mercaptoverbindungen, beeinflußt werden.

Die Pfropf-Copolymerisation kann so geführt werden, daß man einen Teil des Monomerengemisches vorlegt, die Polymerisation startet und dann die Monomerenmischung zudosiert. Die Zuckerkomponente wird entweder komplett in die Vorlage gegeben oder zusammen mit der Monomerenmischung dosiert oder aber nur zu einem Teil vorgelegt und zum anderen Teil dosiert. Die Temperatur bei der Copolymerisation kann in einem weiten Bereich schwanken. Dieser Bereich liegt zwischen 0° C und 200° C. Je nach verwendeten Initiatoren können Temperaturen zwischen 10 C und 150° C, vorzugsweise zwischen 20° C und 120° C optimal sein. Möglich ist es, die Polymerisation am Siedepunkt des Lösungsmittels bei reduziertem oder erhöhtem Druck durchzuführen.

Oft kann es vorteilhaft sein, die Polymerisation unter adiabatischen Bedingungen durchzuführen. Der Polymerisationsstart erfolgt dann zweckmäßig bei niedrigen Temperaturen, z. B. bei 25 °C. Die durch die freiwerdende Polymerisationswärme erreichte Endtemperatur hängt von den eingesetzten Monomeren und Konzentrationsverhältnissen ab und kann bei einem entsprechenden Druck z. B. bis 180 °C betragen.

Der pH-Wert kann während der Copolymerisation in einem weiten Bereich schwanken. Vorteilhaft wird die Copolymerisation bei niedrigen pH-Werten durchgeführt, etwa in der Art, daß die eingesetzte Acrylsäure nicht oder nur teilweise vorneutralisiert wird und man gegebenenfalls erst gegen Ende der Polymerisation neutral (pH 7 - 8) einstellt. Die erfindungsgemäßen Pfropfcopolymerisate können in kontinuierlicher und diskontinuierlicher Verfahrensweise hergestellt werden.
In den Beispielen werden Herstellung und Eigenschaften der erfindungsgemäßen Pfropfcopolymerisate erläutert. Überraschend war die Tatsache, daß das Bindevermögen für mehrwertige Kationen gegenüber Pfropfcopolymeren, die unter Verwendung von Maleinsäureanhydrid hergestellt werden, deutlich erhöht ist. Darüber hinaus wird mit den erfindungsgemäßen Produkten eine starke Verzögerung der Ausfällung unlöslicher Calcium- und Magnesiumsalze erreicht. Am Beispiel von Talkum-Slurries wird die dispergierende Wirkung der erfindungsgemäßen Pfropfcopolymere auf Pigmente beschrieben und die biologische Abbaubarkeit nach dem modifizierten MITI-Test und dem modifizierten Sturm-Test (OECD- Richtlinie Nr. 301) demonstriert.

Die erfindungsgemäßen Pfrofcopolymerisate können als Dispergier- und Komplexiermittel eingesetzt werden. Mit ihnen werden mehrwertige Metallionen in wasserlöslichen Komplexen gebunden. Sie dienen zur Inhibierung von Wasserhärte. Sie sind Hilfsmittel und Komponente in Wasch- und Reinigungsmitteln sowie in Wasch- und Färbeflotten, wobei sie im besonderen als Cobuilder hervorragend geeignet sind.

Die erfindungsgemäßen Pfropfcopolymerisate sind gut biologisch abbaubar und können sehr gut in Textilwaschmitteln, Geschirrspülmitteln, Kalk- und Kesselsteinentfernern, Wasserbehandlungsmitteln und Textilhilfsmitteln verwendet werden. Die Pfropfcopolymerisate können dabei in wäßriger Lösung, als Pulver oder als Granulat eingesetzt werden.

In der folgenden Tabelle wird angegeben, in welchen Mengen (als Gewichtsprozente) die Pfropfcopolymerisate im allgemeinen in Wasch- und Reinigungsmitteln eingesetzt werden.

| | |
|---|---|
| Pulverwaschmittel (Textilien) | 3 bis 30 % |
| Wasserenthärter | 5 bis 30 % |
| Reinigungsmittel /z.B. Haushaltsreiniger) | 1 bis 5 % |
| Geschirreiniger (maschinell) | 5 bis 25 % |

Dabei können beispielhaft, die Erfindung jedoch nicht beschränkende Rezepturen für Wasch- und Reinigungsmittel angegeben werden:

| **Pulverwaschmittel** | |
|---|---|
| Alkylbenzolsulfonat, Na-Salz | 8 % |
| Fettalkoholethoxylat | 5 % |
| Seife | 3 % |
| Zeolith A | 25 % |
| Natriumcarbonat | 15 % |
| Natriummetasilikat | 5 % |
| Magnesiumsilikat | 1 % |
| Natriumperborat | 20 % |
| Pfropfcopolymerisate | 5 % |
| Natriumsulfat, Wasser u.a. | ad 100 % |

| **Geschirreiniger (maschinell)** | |
|---|---|
| Tensid, schaumarm | 2 % |
| Natriummetasilikat | 50 % |
| Natriumcarbonat | 5 % |
| Pfropfcopolymerisate | 5 % |
| Natriumsulfat | ad 100 % |

| **Klarspüler** | |
|---|---|
| Tensid, schaumarm | 10% |
| Pfropfcopolymerisate | 5% |
| Isopropanol | 10% |
| Cumolsulfonat | 2 % |
| Wasser | ad 100 % |

| **Geschirrspülmittel (manuell)** | |
|---|---|
| Paraffinsulfonat, Na-Salz | 20 % |
| Fettalkoholethersulfat, Na-Salz | 5 % |
| Betain | 3 % |
| Pfropfcopolymerisate | 2 % |
| Wasser | ad 100 % |

| **Allzweckreiniger** | |
|---|---|
| Paraffinsulfonat, Na-Salz | 5 % |
| Fettalkoholethoxylat | 5 % |
| Isopropanol | 5 % |
| Pfropfcopolymerisate | 1 - 3 % |
| Wasser | ad 100 % |

Die erfindungsgemäßen Polymerisate sind als Hilfsmittel bei der Vorbehandlung und Veredlung von Faserrohstoffen, Fasern, Textilien oder Textilmaterialien vorteilhaft verwendbar. So beim Abkochen bzw. Beuchen von Baumwolle unter Bindung der Härtebildner und unter Dipergierung der Baumwollbegleitsubstanzen bzw. Verunreinigungen, deren Wiederaufziehen verhindert wird und indem sie die Wirkung von Tensiden unterstützen. Die erfindungsgemäßen Polymerisate werden als Stabilisatoren beim Bleichen mit Wasserstoffperoxid eingesetzt; bei der zusätzlicher Verwendung von stabilisierenden Silikaten verhindern sie Silikatabscheidungen.

Die erfindungsgemäßen Polymerisate sind auch als Hilfsmittel in Wasch- und Färbeflotten kontinuierlicher und diskontinuierlicher Art anwendbar, wobei der unfixierte Farbstoff entfernt wird und gute Wasch-, Wasser- und Reibechtheiten erreicht werden. Im Falle von Polyesterfasern wird zusätzlich die Abtrennung von sich herauslösenden und den Färbeprozess störenden oligomeren Polyesterbestandteilen durch die dispergierende Wirkung der Polymeren erreicht.

Die erfindungsgemäßen Polymerisate eignen sich als Hilfsmittel beim Färben von natürlichen und/oder synthetischen Fasern oder Textilmaterialien . So wird beim Färben von Zellulosefasern die Löslichkeit von Reaktiv- und Direktfarbstoffen gefördert und eine verbesserte Egalität des Farbstoffes auf der Faser, insbesondere bei Anwesenheit hoher Salzmengen in der Flotte bewirkt.

Sie können als Mittel zum Anteigen der Farbstoffe in der Küpenfärberei oder als Dispergatoren im Pigmentierungsbad vorteilhaft eingesetzt werden. Bei Schwefelfarbungen unterstützen.sie die Feinverteilung der Farbstoffe und verhindern das Bronzieren.

Beim Färben von Synthesefasern wird durch die erfindungsgemäßen Polymerisate die Bildung von Agglomeraten aus Dispersionsfarbstoffen verhindert, so daß Ablagerungen in den Wickelkörpern vermieden werden.

Die erfindungsgemäßen Pfropfcopolymerisate sind als Hilfsmittel beim Textildruck, insbesondere bei der Nachwäsche von Reaktivdrucken und Echtfärbungen von natürlichen und/oder synthetischen Fasern oder Textilmaterialien anwendbar. Nicht fixierte Farbstoffanteile werden durch sie gebunden und das Wiederaufziehen wird drastisch reduziert. Durch die erhöhte Diffusion der Farbstoffe zur Wasch-flotte wird durch die Polymerisate eine optimale Entfernung unfixierter Farbstoffe unter Einsparung von Wasser und Energie erreicht.
Die erfindungsgemäßen Produkte stellen so beim Nachbehandeln von Naphtholfärbungen einen wirkungsvollen Ersatz für Polyphosphate dar, bei der Nachwäsche von Reaktivdrucken werden Ausfällungen von Calciumalginat verhindert.

Die dispergierende und komplexbildende Wirkung der erfindungsgemäßen Polymerisate erfolgt dabei ohne Remobilisierung von Schwermetallverbindungen, sowohl aus Farbstoffchromophoren (Reaktiv-, Metallkomplexfarbstoffen) als auch aus an sich wasserunlöslichen, natürlichen oder industriell bedingten Ablagerungen.

Die Einsatzmengen können in der Praxis gegenüber herkömmlichen Hilfsmitteln, wie Polyacrylaten bis um das 3- bis 5-fache reduziert werden.
Die erfindungsgemäßen Polymerisate können in Kombination mit Tensiden, insbesondere anionischen Tensiden, in unneutralisierter Form (als saure Einstellung) in Kombination mit komplexierend wirkenden organischen Säuren, wie Citronensäure, Milchsäure, Gluconsäure und Phosphonsäuren und Tensiden, insbesondere anionischen Tensiden eingesetzt werden.

Derartige Kombinationen werden beispielsweise vorteilhaft anstelle der bisher üblichen mehrstufigen, in jeweils separaten Bädern erfolgenden Vorbehandlung, beispielsweise von hochbelasteter Baumwolle oder Baumwolle-Linters, mit den Stufen saure Extraktion, Choritbleiche, Abkochen und H₂O₂-Bleiche, in der Weise vorgenommen, daß die Vorbehandlung in nur einem veränderbaren Behandlungsbad unter Zusatz der erfindungsgemäßen Polymerisate erfolgt.

Diese erfindungsgemäße Verfahrensweise läßt sich auch auf Continue-Prozesse übertragen. Die genannten Verfahrensweisen vermeiden die Bildung von unerwünschten organischen Halogenverbindungen und entsprechende Umweltbelastungen.
Die Polymerisate eignen sich als Zusätze zum Entschlichten von wasserhärteempfindlichen Faserschlichten, die auf natürlichen und/oder synthetischen Fasern oder Textilmaterialien fixiert sind.

Bei der Lederherstellung bewirken die erfindungsgemäßen Polymerisate während der Chromgerbung eine erhöhte Chromaufnahme durch das Leder und in der Nachgerbung füllende und weichmachende Eigenschaften des Leders.

Aufgrund der dispergierenden und Schwermetall-komplexierenden aber nicht remobilisierenden Eigenschaften eignen sich die erfindungsgemäßen Polymerisate weiterhin in vorteilhafter Weise als Hilfsmittel bei der Papierherstellung, beispielsweise zur Herstellung von Dispersionen von Pigmenten und Füllstoffen, wie Kaolin, Calciumcarbonat, Satinweiß, Talkum, Titandioxid, Aluminiumhydroxid und Bariumsulfat, sowie zur Herstellung von Streichfarben, wobei Füllstoff- und Pigmentslurries und Streichfarben mit hohem Feststoffgehalt und hoher Lagerstabilität erhalten werden. Die erfindungsgemäßen Polymeren können in Kombination mit anderen Hilfsmitteln eingesetzt werden.

Aufgrund der hohen Effizienz der erfindungsgemäßen Polymerisate, aus der sich niedrige Einsatzkonzentrationen in der Anwendung ergeben, und der guten biologischen Abbaubarkeit weisen die Produkte eine hohe ökologische Akzeptanz auf.

Die in den folgenden Beispielen und Vergleichsbeispielen ausgeführten Polymerisationsreaktionen wurden im 2-Liter-Reaktionskolben mit Rührer, Rückflußkühler, Thermometer und Dosiereinrichtungen für flüssige und gasförmige Stoffe durchgeführt.

### Beispiele 1-7

Eine Mischung aus Acrylsäure, Zucker, Natriummethallylsulfonat, einem weiteren Comonomer und Wasser wird mit 50%iger Natronlauge im Reaktor teilneutralisiert, auf 25 °C abgekühlt und mit 8,8 g Mercaptoethanol, 0,02 g Eisensulfat in 10,0 g Wasser und 3 g 35%igem Wasserstoffperoxid versetzt. Wenn die durch die einsetzende Polymerisationsreaktion ansteigende Temperatur im Reaktor über 75 °C steigt, wird nach Erreichen der maximalen Temperatur auf 75 °C zurückgekühlt. Bleibt die Temperatur unter 75 °C, wird nach Erreichen des Temperaturmaximums auf 75 °C aufgeheizt. Dann werden 2 g Hydroxylammoniumchlorid in 15,7 g Wasser und 14,3 g 35%iges Wasserstoffperoxid in den Reaktor gegeben und ein erneutes Ansteigen der Temperatur abgewartet. Nach dem Abklingen der exothermen Reaktion wird auf 95 °C erhitzt und 2 Stunden bei dieser Temperatur gehalten, dann abgekühlt und bei 40 bis 45 °C mit 50%iger Natronlauge neutralisiert. Die Polymerisate sind braun gefärbt und klar. Die eingesetzten Mengen und Angaben zu den Polymerisaten sind in Tabelle 1 aufgeführt.

### Beispiel 8

Der Ablauf der Polymerisation entspricht dem der Beispiele 1 - 7 mit der Änderung, daß die Teilneutralisation am Anfang unterbleibt und sauer polymerisiert wird.

### Beispiele 9 - 11

Der Ablauf der Polymerisation entspricht dem der Beispiele 1 - 8, bezüglich der Menge Mercaptoethanol wurden hier jedoch nur 4,4 g eingesetzt.
Die Ergebnisse sind in der Tabelle 1 aufgeführt.

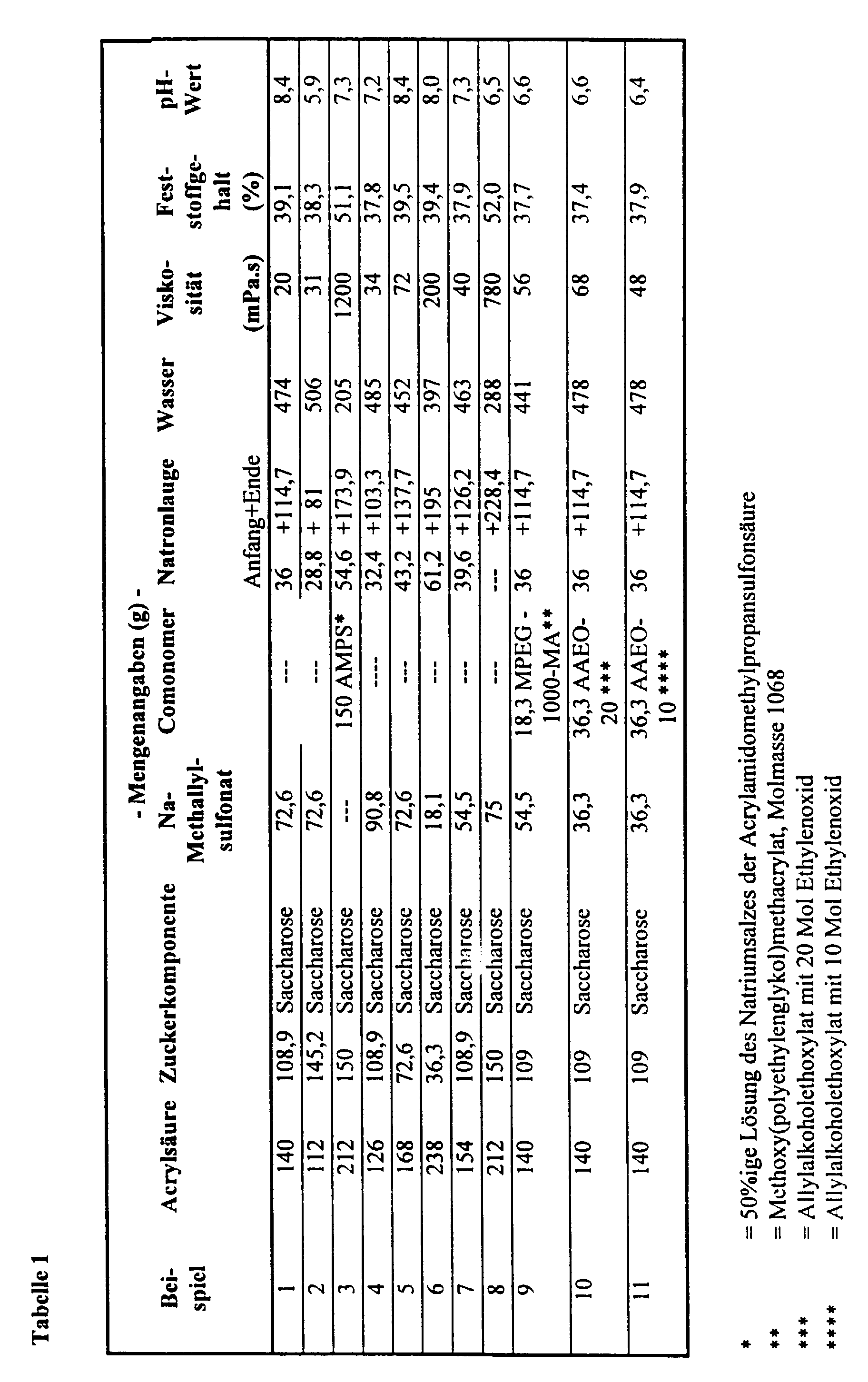

### Beispiel 12

224 g Acrylsäure werden im Polymerisationsreaktor mit 381,6 g Wasser vermischt und mit 64 g 45%iger Natronlauge teilneutralisiert. In diese Lösung werden 36,3 g Saccharose und 36,3 g Natriummethallylsulfonat eingerührt. Anschließend erfolgt die Zugabe von 8,8 g Mercaptoethanol, 0,02 g Eisen-II-sulfat in 10,0 g Wasser und 3 g 35%igem Wasserstoffperoxid. Die Temperatur steigt von 25 °C auf 101 °C, um dann wieder abzufallen. Bei 75 °C werden 2 g Hydroxylammoniumchlorid in 15 g Wasser und 14,3 g 35%iges Wasserstoffperoxid zugegeben, wodurch die Temperatur auf 79 °C ansteigt. Die Temperatur wird durch Heizen auf 95 °C gebracht und für 2 h gehalten. Man setzt nun 15 g 35%iges Wasserstoffperoxid dazu, senkt die Temperatur auf 70 °C, neutralisiert mit 204 g 45%iger Natronlauge und polymerisiert noch 30 Minuten bei 70 °C nach. Das fertige Polymerisat ist hellgelb und klar, hat einen Trockensubstanzgehalt von 41,1 %, eine Viskosität von 80 mPa.s und einen pH-Wert von 6,6. Als Zahlen- und Gewichtsmittel des Molekulargewichts wurde Mn = 1412 und Mw = 4939 gefunden. Der Restmonomergehalt an Acrylsäure beträgt 0,006 % und der an Natriummethallylsulfonat 0,143 %.

### Beispiel 13

82,2 g Acrylsäure werden mit 414,8g Wasser verdünnt und mit 21,1g Natronlauge (50 %ig), 58,1g Natriummethallylsulfonat, 116,2g Saccharose und 205,4g Acrylamidlösung (40 %ige wäßr. Lösung) vermischt. Nach Zugabe von 8,8g Mercaptoethanol, 0,02g Eisen-II-sulfat in 10g Wasser und 3g 35 %igem Wasserstoffperoxid steigt die Temperatur von 25 °C auf 70 °C, worauf 2g Hydroxylammoniumchlorid in 15g Wasser und 14,3g 35%iges Wasserstoffperoxid hinzugefügt werden. Daraufhin steigt die Temperatur auf 79 °C und wird dann mittels eines Heizbades auf 95 °C erhöht und für 2h gehalten. Danach wird auf 45°C abgekühlt und mit 67,3g 50 %iger Natronlauge neutralisiert. Das Polymerisat ist dunkelbraun gefärbt und klar, die Trockensubstanz beträgt 36,8 %, die Viskosität liegt bei 35 mPa.s und der pH-Wert beträgt 7,00.

### Beispiel 14

192,8 g Acrylsäure werden mit 272,6 g Wasser, 55,1 g 45%iger Natronlauge, 100 g Natriummethallylsulfonat und 150 g Saccharose vermischt. Bei 25 °C werden 8,8 g Mercaptoethanol, 0,02 g Eisensulfat in 10 g Wasser und 3 g 35%iges Wasserstoffperoxid zugefügt. Die Temperatur steigt auf 91 °C, um dann wieder abzufallen. Ab 72 °C werden 2 g Hydroxylammoniumchlorid in 15 g Wasser und 14,3 g 35%iges Wasserstoffperoxid zugegeben, worauf die Temperatur auf 93 °C ansteigt. Es werden nochmals 2 g Hydroxylammoniumchlorid in 15 g Wasser und 14,3 g 35%iges Wasserstoffperoxid zugefügt und eine Temperatur von 95 °C für 2 h beibehalten. Das Polymerisat ist klar und von dunkelbrauner Farbe, der pH-Wert beträgt 6,3, die Viskosität liegt bei 530 mPa.s und die Trockensubstanz bei 51,2 %. Als Zahlen- und Gewichtsmittel des Molekulargewichts wurde Mn = 841 und Mw = 2554 gefunden. Der Restmonomergehalt an Acrylsäure beträgt 0,002 % und der an Natriummethallylsulfonat 0,77 %.

### Beispiel 15

30 Gew% einer Mischung aus 212,1 g Acrylsäure, 150 g Saccharose, 75 g Natriummethallylsulfonat, 287,7 g Wasser und 54,6 g 50%iger Natronlauge werden im Reaktor vorgelegt und bei 21 °C mit 2,6 g Mercaptoethanol, 0,9 g 35%igem Wasserstoffperoxid und 0,02 g Eisen-II-sulfat in 8,6 g Wasser versetzt, worauf die Temperatur auf 86 °C steigt. Es werden nun 6,2 g Mercaptoethanol und 0,02 g Eisen-II-sulfat in 8,6 g Wasser zugegeben und gleichzeitig innerhalb 1 Stunde der Rest der o. g. Monomermischung sowie eine Lösung aus 2,1 g 35%igem Wasserstoffperoxid in 1,4 g Wasser zudosiert. Die Temperatur wird bei 85 °C gehalten. Nach dem Ende der Dosierung werden 14,3 g 35%iges Wasserstoffperoxid zugefügt. Die Temperatur steigt auf 97 °C, um dann wieder abzufallen. 2 g Hydroxylammoniumchlorid in 8,5 g Wasser werden bei Erreichen von 85 °C zugegeben und die Temperatur für 2 Stunden beibehalten. Danach kühlt man auf 40 °C ab und neutralisiert mit 173,8 g 50%iger Natronlauge. Das Polymerisat ist dunkelbraun und klar, die Trockensubstanz beträgt 52,8 %, der pH-Wert 6,7 und die Viskosität 1040 mPa.s. Das Zahlen- und Gewichtsmittel des Molekulargewichts wurde mit Mn = 1755 und Mw = 6773 bestimmt. Der Restgehalt an Acrylsäure beträgt 0,01 % und der an Natriummethallylsulfonat 0,32 %.

### Beispiel 16

212,1 g Acrylsäure werden mit 281,3 g Wasser, 54,6 g 50%iger Natronlauge, 75 g Natriummethallylsulfonat und 150 g Saccharose vermischt und bei 25 °C mit 8,8 g Mercaptoethanol, 0,02 g Eisen-II-sulfat in 10 g Wasser und 3 g 35%igem Wasserstoffperoxid versetzt. Die Temperatur steigt auf 101 °C, um danach wieder zu sinken. Ab 80 °C werden 2 g Hydroxylammoniumchlorid in 8,6 g Wasser und 5 g Natriumpersulfat in 15.0 g Wasser zugefügt, anschließend hält man für 70 Minuten eine Temperatur von 85 °C. Nach dem Abkühlen auf 40 °C neutralisiert man mit 173,8 g 50%iger Natronlauge. Das Polymerisat ist klar und gelb, hat einen Trockensubstanzgehalt von 51,5 %, eine Viskosität von 360 mPa.s und einen pH-Wert von 6,5.

### Beispiel 17

212,1 g Acrylsäure werden mit 2,5 g Triallylamin, 281,3 g Wasser, 54,6 50%iger Natronlauge, 75 g Natriummethallylsulfonat und 150 g Saccharose vermischt und bei 20 °C mit 0,02 g Eisen-II-sulfat in 10 g Wasser und 3 g 35%igen Wasserstoffperoxid versetzt. Unter leichter Erwärmung steigt die Temperatur innerhalb von 90 Minuten auf 102 °C. Danach läßt man auf 75 °C abkühlen, gibt 2 g Hydroxylammoniumchlorid in 15 g Wasser und 14,3 g 35%iges Wasserstoffperoxid hinzu und rührt eine Stunde bei 95 °C. Dann kühlt man auf 40 °C ab und neutralisiert mit 174 g 50%iger Natronlauge. Das Polymerisat ist klar und braun, hat einen Trockensubstanzgehalt von 52,3 %, eine Viskosität von 1900 mPa.s und einen pH-Wert von 7,6. Das Zahlen- und Gewichtsmittel des Molekulargewichts wurde mit Mn = 2558 und Mw = 8467 bestimmt.

### Beispiel 18

74,7 g Acrylsäure, 26,4 g Natriummethallylsulfonat, 150 g Saccharose, 186,6 g Wasser und 43,4 g Natriumhydroxyd werden miteinander gelöst und im Reaktor vorgelegt und zum Sieden erhitzt. Dazu wird in einem Zeitraum von 5 Stunden eine Lösung aus 137,4 g Acrylsäure, 48,6 g Natriummethallylsulfonat und 50 g Wasser dosiert sowie über 6 Stunden je 80 g 30%iges Wasserstoffperoxid und 96 g einer 25%igen wäßrigen Natriumpersulfatlösung. Im Anschluß an die Dosierung wird noch 1 Stunde nachgerührt, dann auf 40 °C abgekühlt und mit 166,9 g 50%iger Natronlauge neutralisiert. Das Polymerisat ist farblos und klar, hat einen Trockensubstanzgehalt von 52 % und eine Viskosität von 820 mPa.s. Der Restmonomergehalt beträgt 0,002 % Acrylsäure und 0,025 % Natriummethallylsulfonat. Als Zahlen- und Gewichtsmittel des Molekulargewichts wurde Mn = 2014 und Mw = 5135 bestimmt.

### Beispiel 19

190,8g Acrylsäure, 261,0g Wasser, 49,0g 50 %ige Natronlauge, 150g Saccharose, 75g Natriummethallylsulfonat und 21,2g Vinylacetat werden miteinander gelöst und im Reaktor vorgelegt. Nach Zugabe von 8,8g Mercaptoethanol, 0,02g Eisen-II-sulfat in 10g Wasser und 3g 35%igem Wasserstoffperoxid steigt die Temperatur von 23 °C auf 88 °C an, um dann wieder auf 75 °C abzufallen, worauf 2g Hydroxylammoniumchlorid in 15g Wasser und 14,3g 35%iges Wassersotffperoxid hinzugefügt werden. Die Temperatur steigt kurzzeitig auf 90 °C und wird dann mittels eines Heizbades aufca 86 °C für 1h gehalten. Nun wird ein Wasserabscheider aufgesetzt, um nicht umgesetztes Vinylacetat abzudestillieren. Dabei werden 5g Vinylacetat und 31,7g Wasser innerhalb einer Stunde abgetrennt, die Temperatur im Reaktor steigt dabei auf 99 °C. Anschließend wird abgekühlt und mit 50 %iger Natronlauge neutralisiert. Das Polymerisat ist klar und von dunkelbrauner Farbe, der Trockensubstanzgehalt beträgt 51%.

### Vergleichsbeispiel 1 (nach DE 37 14 732 C2, Beispiel 2)

108 g Acrylsäure werden mit 300 g 20%iger Natronlauge neutralisiert. 91 g Glucose werden in 100 g Wasser gelöst und mit 49 g 35%iger H2O2-Lösung vermischt. 100 g Wasser werden im Reaktionsgefäß auf 85 °C erhitzt, und dann läßt man über 90 Minuten die Acrylsäure- und Glucose-Lösung zulaufen, der pH-Wert wird bei 9,0 gehalten.
10 Minuten nach Abschluß der Dosierung steigt die Temperatur im Reaktionsgefäß plötzlich auf 103 °C an, und das Polymerisat verfärbt sich gelb. Anschließend wird abgekühlt.
Die Polymerlösung hat einen Feststoffgehalt von 30,6 % und eine Viskosität von 220 mPa.s. Durch Zugabe von Salzsäure läßt sich das Polymer in Form eines schleimigen Niederschlags ausfällen.

### Vergleichsbeispiel 2 (nach DE 40 03 172 A1, Beispiel 21)

243 g Wasser, 160 g Saccharose, 47,9 g Maleinsäureanhydrid, 0,57 g phosphorige Säure und 2 g Natriumhydrogensulfit werden im Reaktionsgefäß vorgelegt und im Stickstoffstrom 1 Stunde bei 80 °C gerührt. Dann fügt man zur Vorlage langsam 70,5 g 50%ige Natronlauge zu und dosiert innerhalb von 5 Stunden bei 80 °C eine Lösung von 133,6 g Acrylsäure in 141,9 g Wasser und innerhalb von 6 Stunden Lösungen von 8,1 g 35%igen Wasserstoffperoxid in 37,6 g Wasser und 2,85 g Natriumsulfat in 40 g Wasser gleichmäßig dazu. Anschließend wird der Ansatz noch 2 Stunden nacherhitzt. Die Polymerlösung hat einen Feststoffgehalt von 37,7 % und eine Viskosität von 155 mPa.s.

### Vergleichsbeispiel 3 (nach DE 40 03 172 A1, Beispiel 25)

290 g Maltodextrin MD 14 (Dextrose-Äquivalent-Wert 14, Fa. Avebe), 470 g Wasser, 4,2 ml 0,1%ige wäßrige Lösung von Eisen-II-ammoniumsulfat, 101,4 g Maleinsäureanhydrid und 74,5 g Natriumhydroxid werden im Reaktionsgefäß vorgelegt und zum Sieden erhitzt. Nach Siedebeginn dosiert man innerhalb von 5 Stunden eine Mischung aus 120 g Acrylsäure und 132,7 g einer 50%igen wäßrigen Lösung des Natriumsalzes der Acrylamidomethylpropansulfonsäure und innerhalb von 6 Stunden 80 g 30%iges Wasserstoffperoxid und eine Lösung von 24 g Natriumpersulfat in 72 g Wasser und hält dabei die Temperatur am Siedepunkt des Gemisches. Nach Ende der letzten Initiatordosierung wird 1 h nacherhitzt. Dann wird mit 155 g 50%iger Natronlauge neutralisiert. Man erhält eine trübe braune Lösung mit einem Feststoffgehalt von 45,2 % und einer Viskosität von 560 mPa.s. Innerhalb von 14 Tagen hat sich aus der trüben Lösung ein Niederschlag abgesetzt.

### Vergleichsbeispiel 4

108,9 g Saccharose, 185 g Wasser, 77 g Maleinsäureanhydrid, 2,2 mg Eisen-II-ammoniumsulfat und 112,8 g 50%ige Natronlauge werden im Reaktor vorgelegt und zum Sieden erhitzt. Nach Siedebeginn wird innerhalb von 4 Stunden eine Lösung aus 77 g Acrylsäure, 54,4 g Natriummethallylsulfonat und 94 g Wasser und innerhalb von 5 Stunden eine Lösung aus 34 g 35%igem Wasserstoffperoxid, 12 g Natriumpersulfat und 66 g Wasser zudosiert. Danach rührt man noch 1 Stunde am Rückfluß nach und neutralisiert anschließend mit 93,6 g 50%iger Natronlauge. Die braune Polymerlösung ist klar, hat eine Viskosität von 74 mPa.s und einen Feststoffgehalt von 43,8 %. Während der gesamten Polymerisationsreaktion war eine Entwicklung von Kohlendioxid zu beobachten.
Vergleichsbeispiel 4 wurde entsprechend DE 40 03 172 Al mit Maleinsäureanhydrid als Comonomer hergestellt und demonstriert den dadurch bedingten Verlust an Carboxylgruppen durch CO2- Abspaltung und den starken Abfall im Calciumbindevermögen (Tabelle 4) im Vergleich zum erfindungsgemäßen Polymerisat nach Beispiel 7. Vergleichsbeispiel 4 unterscheidet sich in der Monomerzusammensetzung von Beispiel 7 lediglich dadurch, daß 50% der Acrylsäure durch Maleinsäureanhydrid ersetzt worden sind.

### Vergleichsbeispiel 5

154 g Acrylsäure, 444 g Wasser, 54,5 g Natriummethallylsulfonat, 113,7 g Maltodextrin (DE-Wert 20) und 39,6 g 50%ige Natronlauge werden im Reaktor gelöst und bei 28 °C mit 4,4 g Mercaptoethanol, 0,02 g Eisensulfat in 8,6 g Wasser und 3 g 35%igem Wasserstoffperoxid in 1,4 g Wasser versetzt. Die Temperatur steigt bis auf 62 °C. Nun werden 2 g Hydroxylammoniumchlorid in 8,6 g Wasser und 14,3 g 35%iges Wasserstoffperoxid in 7 g Wasser zugegeben. Die Temperatur steigt nochmals an, um bei 75 °C ihr Maximum zu erreichen. Mit einem externen Heizbad wird die Temperatur auf 95 °C erhöht und für 2 Stunden gehalten. Danach wird auf 30 °C abgekühlt und mit 126,2 g 50%iger Natronlauge neutralisiert und mit 13,7 g Wasser auf einen Feststoffgehalt von 36,5 % eingestellt. Das Polymerisat ist trüb, von brauner Farbe und hat eine Viskosität von 90 mPa.s. Die Trübung setzt sich innerhalb weniger Tage als Niederschlag ab.

Vergleichsbeispiel 5 wurde in Anlehnung an Beispiel 7 durchgeführt, allerdings ist die Zuckerkomponente gegen ein Stärkederivat (Maltodextrin) ausgetauscht. Damit wird demonstriert, daß die Verwendung höhermolekularer Polysaccharide oft zu trüben und uneinheitlichen Polymerisaten führt.

### Bestimmung der Beständigkeit gegenüber hartem Wasser

Zu einem Prüfwasser von 33,6 °dH (reine Calciumhärte) wird eine bestimmte Menge 10%iger PfropfcopolymerLösung gegeben, 5 Minuten auf einer Heizplatte gekocht und anschließend optisch bezüglich Klarheit, Opaleszenz und Trübung beurteilt. Durch Variation der Menge an Pfropfcopolymer wird die Konzentration an Gramm Produkt (Trockensubstanz) pro Liter Hartwasser ermittelt, bei der nach vorhergehender Trübung/Opaleszenz erstmals eine klare Lösung auftritt.

Die Ergebnisse machen deutlich, daß mit den erfindungsgemäßen Polymerisaten eine wirksame Inhibierung von Kesselstein oder ähnlichen Ablagerungen bzw. Ausfällungen von Bestandteilen des Hartwassers erreicht werden kann.

**Tabelle 2**

| Produkt Beispiel | Hartwasserbeständigkeit, klar bei (g T.S./l) |
|---|---|
| 4 | 1,5 |
| 8 | 2,0 |
| 9 | 0,5 |
| 12 | 2,0 |
| 13 | >1,0 |
| 16 | 2,5 |
| Vergleichsbeispiel 1 | >3,0 |
| Vergleichsbeispiel 2 | 3,0 |

### Dispergierversuche

Um die dispergierende Wirkung der erfindungsgemäßen Pfropfcopolymere auf Pigmen-te zu zeigen, wurde Talkum (Finntalc C10, Fa. OMYA) in wäßrige Pfropfcopolymerlösungen von pH 12,0 bis zu einem Pigmentgehalt von 65 % eingerührt und die Viskosität sofort bzw. nach 7 Tagen gemessen und die Aufrührbarkeit (1 → 6) benotet. Als Stand der Technik wurde die Kombination aus POLYSALZ®-S/LUMITEN®-P-T (Fa. BASF AG) herangezogen. Der Zusatz des Dispergiermittels betrug 0,2 % / atro Pigment bzw. im Falle von POLYSALZ^{R}-S/LUMITEN^{R}-P-T entsprechend der Empfehlung des Herstellers folgend 0,15 / 1 % auf atro Pigment.

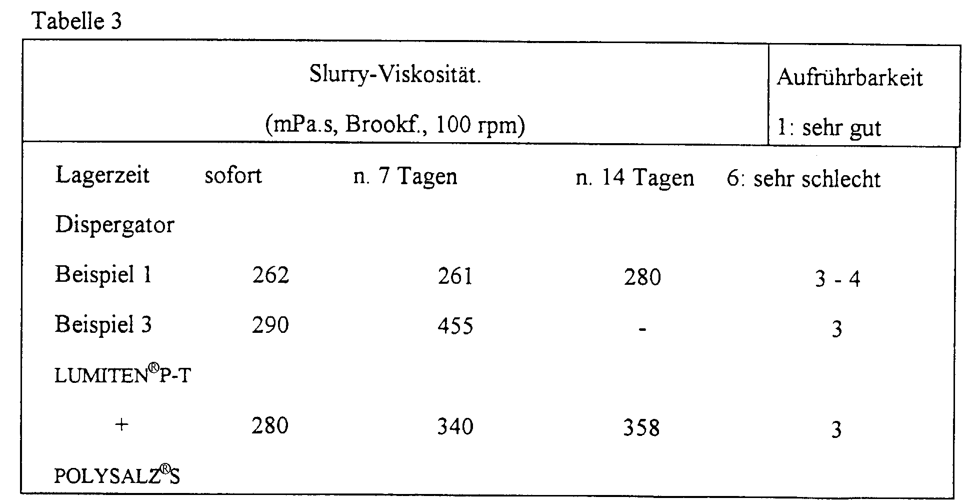

### Bestimmung des Calciumbindevermögens

Das Calciumbindevermögen wird nach dem sog. Hampshire-Test durchgeführt, bei dem man das Polymer in Gegenwart von Carbonationen mit Calciumacetat-Lösung titriert.

Der Endwert der Titration wird in mg CaCO₃/g Polymer angegeben.

Durchführung: 1 g Komplexbildner wird in 50 ml dest. Wasser gelöst, mit Natronlauge neutralisiert, mit 10 ml 2%iger Natriumcarbonat-Lösung versetzt, auf 100 ml aufgefüllt und der pH-Wert auf 11,0 eingestellt. Die Titration erfolgt mit 0,25 m Calciumacetat-lösung bis zum Auftreten einer andauernden deutlichen Trübung/Fällung. Die Vorstufe zur Trübung macht sich in einer leichten Opaleszenz bemerkbar, der Übergang ist je nach Komplexbildner schmal oder breit. Einige der erfindungsgemäßen Polymerisate haben eine so hohe Komplexierfähigkeit, daß außer einer Opaleszenz keine weitere Trübung auftritt.

**Tabelle 4**

| Produkt Beispiel Nr. | Calciumbindevermögen nach Hampshire (mg CaCO₃/g Polymer |
|---|---|
| 1 | 1898 |
| 2 | 990 |
| 3 | leicht opal, keine Trübung/Fällung |
| 4 | 2104 |
| 5 | 2148 |
| 7 | 1642 |
| 8 | 2061 |
| 9 | leicht opal, keine Trübung/Fällung |
| 10 | 1931 |
| 11 | 2972 |
| 12 | 1169 |
| 13 | > 3000 |
| 14 | 2216 |
| 15 | 1450 |
| 16 | 1490 |
| 18 | 2172 |
| Vergleichsbeisp. 1 | 299 |
| Vergleichsbeisp. 2 | 697 |
| Vergleichsbeisp. 4 | 497 |

Die erfindungsgemäßen Polymerisate zeigen sehr hohe Werte für das Calciumbindevermögen. Durch Mitverwendung von Maleinsäureanhydrid (Vergleichsbeispiele 2 und 4) bzw. durch das Fehlen von Sulfonsäuregruppen enthaltendem Monomer (Vergleichsbeispiel 1) entstehen Polymerisate mit schlechterem Bindevermögen für Calcium.

### Biologische Abbaubarkeit

Die biologische Abbaubarkeit kann nach verschiedenen Methoden ermittelt werden. Der ZahnWellens-Test untersucht z. B. die Kohlenstoffabnahme in einem Klärschlamm enthaltenden Testmedium. Da die Kohlenstoffabnahme sowohl über biologischen Abbau als auch über Adsorption am Klärschlamm geschehen kann, ist eine Interpretation der Ergebnisse nicht eindeutig möglich.

Zur Beurteilung der biologischen Abbaubarkeit wurde daher ein modifizierter MITI-Test (OECD Guideline 301 for Testing Chemicals) herangezogen, bei dem die während des Abbaus verbrauchte Sauerstoffmenge gemessen wird. Beurteilungsfehler durch Adsorptionsprobleme am Klärschlamm treten dabei nicht auf. Das Pfropfpolymerisat aus dem Beispiel Nr. 7 zeigte in dem o. g. MITI-Test nach 28 Tagen einen biologischen Abbau von 78,5 % BSB/CSB. Dieses Ergebnis repräsentiert eine gute biologische Abbaubarkeit.

**Tabelle 5**

| Zeit (Tage) | Biologische Abbaubarkeit (% BSB/CSB) |
|---|---|
| 0 | 0 |
| 7 | 0 |
| 14 | 46,5 |
| 21 | 61,0 |
| 28 | 78,5 |

Als weiterer Abbau-Test wurde der modifizierte STURM-Test entsprechend der EG-Richtlinie 84/449/EWG C5 und der OECD Guideline No. 301 B herangezogen. Hierbei wurde über die Kohlendioxidentwicklung innerhalb von 28 Tagen der biologische Abbau des Polymers nach Beispiel 20 verfolgt und zu 89% bestimmt.

| **Zeit** (Tage) | **Biologische Abbaubarkeit** (% BSB/CSB) |
|---|---|
| 30Min | 1 |
| 3 | 18 |
| 7 | 34 |
| 12 | 51 |
| 18 | 76 |
| 21 | 77 |
| 26 | 91 |
| 28 | 89 |

### Beispiel 20

Hier wird Beispiel 9 mit der Änderung wiederholt, daß 36,3g Methoxypolyethylenglykol methacrylat und 36,3g Natriummethallylsulfonat Verwendung finden. Das Polymerisat hat eine Trockensubstanz von 36,3 %, einen pH-Wert von 6,3 und eine Viskosität von 80 mPas. Als Zahlen- und Gewichtsmittel des Molekulargewichts wurden bestimmt Mn = 2009 und Mw = 7170.

### Beispiel 21

Zu einer Lösung von 154 g Acrylsäure, 39,6 g 50%iger Natronlauge, 108,9 g Natriumsulfatoethylmethacrylat (50%ige wäßr. Lösung), 136,1g Glucose in 372g Wasser werden bei 25 °C 8,83 g Mercaptoethanol, 0,02 g Eisensulfat (gelöst in 10 g Wasser) sowie 3 g 35%ige Wasserstoffperoxidlösung (gelöst in 5g Wasser) zugefügt. Die Termperatur steigt während 9 Minuten auf 80 °C, woraufhin 2 g Hydroxylaminhydrochlorid (gelöst in 10 g Wasser) und 14,3 g 35%iges Wasserstoffperoxid (gelöst in 10 g Wasser) zugegeben werden. Anschließend wird auf 95 °C erwärmt und diese Temperatur für 2 Stunden beibehalten. Nach dem Abkühlen wird mit 126,2 g 50%iger Natronlauge neutralisiert. Das Polymerisat hat eine Trockensubstanz von 36,1 %, einen pH-Wert von 5,5 und die folgenden Zahlen- und Gewichtsmittel des Molekulargewichts Mn = 1684 und Mw = 6800.

### Beispiel 22

Hier wird das Beispiel 3 mit der Änderung wiederholt, daß anstelle von AMPS eine äquivalente Gewichtsmenge Vinylphosphonsäure Verwendung findet. Der Polymerisationsverlauf ist in der Anfangsphase etwas verzögert und wird durch kurzzeitiges geringes Nachheizen wieder deutlich exotherm. Das Polymerisat hat eine Trockensubstanz von 52,0% und eine Viskosität von 960 mPas, der pH-Wert beträgt 5,4.

### Beispiel 23

Entsprechend dem Versuchsablauf der Beispiele 1-8 wird ein Polymer mit folgenden Monomerbestandteilen hergestellt:

| | |
|---|---|
| Vorlage | 61,6 g Acrylsäure, 43,6 g Hydroxyethylglycosid, 21,8 g Na-Methallylsulfonat, 170,5 g Wasser und 15,8 g 50%ige Natronlauge. |
| Initiierung | 3,5 g Mercaptoethanol, 8 mg Eisen-II-sulfat gelöst in 8 g Wasser, 1,2 g Wasserstoffperoxid (35%ig) sowie 0,8 g Hydroxylaminhydrochlorid gelöst in 8 g Wasser und 5,7 g Wasserstoffperoxid (35%ig) gelöst in 7 g Wasser |
| Neutralisation | 50,5 g Natronlauge (50%ig) |

Das Polymerisat hat einen Trockensubstanzgehalt von 34.9 %, einen pH-Wert von 7.0 und eine Viskosität von 37,5 mPas. Das Calciumbindevermögen nach Hampshire beträgt 1369 mg CaCo₃/g Polymer TS.

### Beispiel 24

In einer Nacharbeitung des Beispiels 3 werden anstelle des dort eingesetzten AMPS-Monomers 187,5 g einer 40 %ige Lösung des Na-Saltzes der Allyliminodiessigsäure verwendet.
Das Polymerisat hat einen Trockensubstanzgehalt von 53,0 % und eine Viskosität von 1210 mPas. Die Hartwasserbeständigkeit beträgt 2,0 g Polymer TS/l.

### Beispiel 25

192,8 g Acrylsäure werden mit 276,7 g Wasser verdünnt und mit 49,6 g Natronlauge (50%ig), 150,0 g Saccharose, 75 g Na-Methallylsulfonat sowie 25 g Methoxypolyethylenglykolmethacrylat (17 Mol EO) vermischt. Nach Zugabe von 20 mg Eisen-II-sulfat, gelöst in 10 g Wasser und 4,4 g Mercaptoethanol wird die Polymerisation mit 3,0 g 35 % igem Wasserstoffperoxid, gelöst in 10 g Wasser, gestartet. Nach dem Erreichen des Temperaturmaximums von 87°C wird eine Lösung aus 4,5 g Natriumpersulfat in 40 g Wasser zugefügt und 2 h bei 95 °C nachgerührt. Es wird abgekühlt und mit 158,0 g 50%iger Natronlauge neutralisiert. Das Polymerisat hat einen Trockensubstanzgehalt von 50,0 %, ein Molekulargewicht von Mw = 6x10³ und Mn = 1,8x10³ sowie eine Hartwasserbeständigkeit von 1,5 g Polymer TS/1.

Gemäß Beispiel 25 wurde ein Polymerisat hergestellt, bei dem die eingesetzten Mengen Natriummethallylsulfonat und Methoxypolyethylenglykol (17 Mol EO) jeweils 50 g betrugen. Das Produkt hatte einen Trockensubstanzgehalt von 50% und zeigte bei der Trübungstitration zur Bestimmung des Calcium-Bindevermögens keine Ausfällungen.

Die Beständigkeit gegenüber Hartwasser lag bei 1,5 g Polymer T.S./l.

### Beispiel 26

### Wäsche von Färbungen

Hier wird die Verwendung der erfindungsgemäßen Polymerisate am Beispiel einer diskontinuierlichen Wäsche nach einer Reaktivfärbung an einem Baumwollgewebe beschrieben.

Zunächst läßt man die Farbflotte ab und dann wird
1. im Überlauf 10 min bei 60 °C gespült
2. auf frischem Bad bei 90 °C 10 min gespült
3. mit 1g/l Polymerisat nach Beispiel 9 10 min bei 90 - 95 °C belassen 15 min bei 45 °C gespült.

Das Baumwollgewebe ist intensiv gefärbt, frei von Ausblutungen und hat eine gute Waschechtheit.

Die oben angegebenen Zeiten, Temperaturen und Reihenfolgen sind beispielhaft. Der Einsatz der erfindungsgemäßen Polymerisate kann auch unter anderen Waschverfahrensbedingungen erfolgen.

### Beispiel 27

### Verhalten der Dispergiermittel in stark alkalischer Flotte

Prüflösungen (500 ml Flotte) aus Wasser mit 24°dH, und 10g/l NaOH und dem erfindungsgemäßen Polymerisat werden auf Kochtemperatur erhitzt, 15 Minuten bei dieser Temperatur gehalten und dann abgekühlt. Das Flottendefizit wird durch Wasserzusatz (20°dH) ausgeglichen.

Die Tabelle 6 gibt das Aussehen der Lösungen in Abhängigkeit von der Einsatzmenge verglichen mit den Handelsprodukten I, II und III an:

**Tabelle 6**

| Einsatzmenge | 0,5 g/l | 1 g/l | 2 g/l | 3 g/l |
|---|---|---|---|---|
| Produkt | | | | |
| | | | | |
| Produkt I | Ausflockung | Ausflockung | Ausflockung | klar |
| Produkt II | Ausflockung | Ausflockung | opal-klar | klar |
| Produkt III | opal-trüb | klar | klar | klar |
| Polymerisat nach Beisp.25 | opal-trüb | klar | opal-klar | klar |

Klare Lösungen werden erhalten bei Einsatzmengen ab
3 g/l mit I
2 g/l mit II
1 g/l mit III
1 g/l Polymerisat nach Beispiel 25

### Beispiel 28

Rohbaumwollstränge werden bei einem Flottenverhältnis von 1 : 10 mit 5 ml Essigsäure 30 Minuten abgekocht. 200 ml der Flotte werden anschließend auf 60°C abgekühlt und mit jeweils
0,5 g/l, 1,0 g/l und 2 g/l des Polymerisats nach Beispiel 25
0,05 g/l Indanthrenblau BC Coll
20,0 ml/l NaOH 50 %ig und
5,0 g/l Hydrosulfit konz.
versetzt.

Nach einer Verweilzeit von 15 Minuten (bei 60°C) wurde die Flotte jeweils durch ein Blauband-Filter abgesaugt.
Die Polymerisate zeigen eine gute Dispergierwirkung und verhindern bei den verwendeten Einsatzkonzentrationen die Abscheidung von Ausflockungen.

### Beispiel 29

Schwarzgefärbte PES-Flocke wurde bei einem Flottenverhältnis von 1 : 20 mit einer Flotte von 1 g/l Polymerisat nach Beispiel 25 und 1g/l SOLOPOL®DP (Fettaminethoxylat, Handelsbezeichnung der Firma Chemische Fabrik Stockhausen GmbH, Krefeld) 20 Minuten bei 70° - 80°C behandelt und dann heiß und kalt gespült. Oligomere, Farb- und Faserstaub werden von den Fasern entfernt.

### Beispiel 30

Es werden 5 g des Polymers gemäß Beispiel 16 in 500 ml - Meßkolben mit dest. Wasser gelöst und zur Marke aufgefüllt. Davon werden jeweils 10 ml in ein 150 ml - Becherglas pipettiert und mit 80 ml des. Wasser verdünnt.

Jedem Ansatz fügt man nun unterschiedliche ml - Mengen einer FeCl₃-Lösung, die 48,41 g FeCl₃·6 H₂O pro Liter gelöst enthält, zu. Anschließend wird mit 0,1 n NaOH bzw. 0,1 n HCI auf den gewünschten pH-Wert eingestellt. Die Lösung wird in einem 250 ml Rundkolben überführt und eine Stunde am Rückfluß gekocht.

Nach Abkühlen auf Raumtemperatur erfolgt die Beurteilung.

Für die Feststellung des Eisenbindevermögens wird derjenige Ansatz der Konzentrationsreihe herangezogen, bei dem noch keine Trübung / Fällung erkennbar ist, während der nächstfolgende Ansatz eine Trübung / Fällung aufweist.

Die Ausrechung erfolgt in mg Fe ³⁺ / 1 Produkt-Trockensubstanz

| pH | Eisenbindevermögen mg Fe ³⁺ / g Polymer T.S. |
|---|---|
| 7 | 600 |
| 9 | 800 |
| 11 | 350 |

### Beispiel 32

Eine Bleiche von 100 % Baumwolle-Linters mit einem Weißgrad von 29,5 (nach Elrepho) wurde in einem Bad mit einem Flottenverhältnis von jeweils 1 : 20 mit folgenden Behandlungsstufen durchgeführt:
**1. Stufe** Behandlung mit einer Flotte aus
   1 ml/l HCl konz. (37 %ig)
   2 ml/l einer Kombination enthaltend
      42,0 Teile des erfindungsgemäßen Polymerisats nach Beispiel 25 in saurer Endeinstellung
      10,0 Teile Milchsäure
      25,0 Teile Gluconsäure
      4,0 Teile Phosphonsäure
      14,0 Teile eines C12-C18 Fettalkoholpolyglycolethersulfats und
      5,0 Teilen eines schaumdämpfenden EO-PO-Blockpolimerisats
   30 Minuten bei 25°C
**2. Stufe**
   A) Behandlung mit einer Flotte aus
      10 ml/l NaOH, 50 %ig
      2 g/l Lavoral® S313 (Handelsprodukt der Chemischen Fabrik Stockhausen GmbH)
      45 Minuten bei 95°C
   B) Behandlung mit einer Flotte aus
      10 ml/l NaOH 50 %ig
      2 g/l der Kombination nach Stufe 1
      45 Minuten bei 95°C
   C) Behandlung mit einer Flotte aus
      10 ml/l NaOH 50 %ig
      2 g/l des erfindungsgemäßen Polymerisats nach Beispiel 25
      45 Minuten bei 95°C
**3. Stufe** Behandlung mit einer Flotte aus
   3 ml/l der Kombination nach Stufe 1 und
   8 ml/l Wasserstoffperoxid 35 %ig
   45 Minuten bei 95°C

   Das Wasserstoffperoxid wird zuvor in einer Lösung aus der Kombination nach Stufe 1 und einer Teilmenge des Wasser verdünnt und heiß langsam zugesetzt.

Die Flotte wird abgelassen und das Material unter Zusatz von 2 ml/l Polymerisat nach Beispiel 25 bei 80°C heiß gespült.
3 Proben des gebleichten Materials zeigen einen Weißgrad von 68,7 / 69,8 / 69,7.

### Beispiel 33

### Herstellung von Leder

Die Eignung der erfindungsgemäßen Polymerisate für die Lederherstellung wird im folgenden am Beispiel der Chromgerbung von Spaltleder und der Nachgerbung von Oberleder gezeigt. Bei der Chromgerbung wird Leder in Chromsalzlösungen behandelt, um Chrom in das Kollagengefüge des Leders einzulagern. Dabei soll möglichst viel Chrom aus der wäßrigen Flotte in das Leder übergehen. Ein erfindungsgemäßes Polymerisat gemäß Beispiel 7 wurde für diese Anwendung mit gutem Ergebnis eingesetzt, der Chromgehalt des Leders konnte deutlich gesteigert werden.

**Tabelle 7**

| Chromgehalt der Restflotte | | Chromoxid-Gehalt des Leders | |
|---|---|---|---|
| vor | nach | vor | nach |
| Polymereinsatz (g/l) | | Polymereinsatz (%) | |
| 3,51 | 0,56 | 2,3 | 3,3 |

Bei der Nachgerbung von Oberleder sind als Beurteilungskriterien die Weichheit, die Narbenfestigkeit, die Lederfarbe und die Fülle heranzuziehen. Im Vergleich zu einem handelsüblichen Nachgerbemittel auf Basis Acrylamid/Acrylsäure wurde das o.g. Polymerisat nach Beispiel 7 mit folgendem Ergebnis getestet:

**Tabelle 8**

| | Polymer gemäß Beispiel 7 | Handelsübliches Polymerisat |
|---|---|---|
| Weichheit | 2 | 3 |
| Narbenfestigkeit | 3 | 2 |
| Lederfarbe | sehr hell | hell |
| Fülle (mm) | 1,8-1,9 | 1,9-2,0 |
| * Die Bewertungsrangfolge ist 1-6, wobei 1 die beste Bewertung darstellt. | | |

## Patentansprüche

1. Pfropf-Copolymerisate erhältlich durch radikalische Pfropf-Copolymerisation von 40 bis 95 Gew.% einer Mischung aus den Monomerkomponenten A) bis E) und 5 bis 60 Gew.% von Monosacchariden, Disacchariden, Oligosacchariden oder Sorbit, Mannit, Gluconsäure, Glukuronsäure, Alkylglykoside, Alkyl-, Hydroxyalkyl- oder Carboxyalkylether als Reaktionsprodukte bzw. Derivate der Saccharide oder Mischungen davon, wobei die Monomermischung aus
A) 36,95 bis 96 Gew.% wenigstens einer monoethylenisch ungesättigten C₃-C₁₀-Monocarbonsäure und/oder deren Salz mit einwertigem Kation oder Mischungen von monoethylenisch ungesättigten C₃-C₁₀-Monocarbonsäuren und/oder deren Salze mit einwertigen Kationen,
B) 4 bis 55 Gew.% wenigstens eines monoethylenisch ungesättigten sulfonsäuregruppenhaltiger Monomeren, eines monoethylenisch ungesättigten Schwefelsäureesters und/oder Vinylphosphonsäure und/oder deren Salze mit einwertigen Kationen;
C) 0 bis 30 Gew.% wenigstens eines wasserlöslichen, monoethylenisch ungesättigten Polyalkylenglykolethers von (Meth)allylalkohol oder Polyalkylenglykolester von (Meth)acrylsäure, der gegebenenfalls endverschlossen sein kann und 2 bis 50 Mol Alkylenoxideinheiten pro Mol (Meth)acrylsäure oder (Meth)allylalkohol enthält;
D) 0 bis 45 Gew.% wenigstens einer weiteren wasserlöslichen, radikalisch polymerisierbaren Verbindung oder einer Verbindung, die entweder wenigstens zwei ethylenisch ungesättigte Doppelbindungen oder eine ethylenisch ungesattigte Doppelbindung sowie eine andere funktionell vernetzend wirkende Gruppe enthält;
E) 0 bis 30 Gew.% in Wasser wenig bzw. unlöslicher, radikalisch polymerisierbarer Alkyl und/oder Hydroxylalkyl(meth-)acrylsäureester, Maleinsäuremono- und/oder dialkylester, N-Alkyl- und/oder N,N'-dialkyl(meth-)acrylamide und/oder Vinylcarbonsäureester besteht, und die Summe aus A bis E 100 Gew.% beträgt.

2. Pfropfcopolymerisate nach Anspruch 1, dadurch gekennzeichnet. daß sie als Monomere A) Acryl- und/oder Methacrylsäure, deren Alkali/Ammonium- und/oder Aminsalze enthalten.

3. Pfropfcopolymerisate nach Anspruch 1, dadurch gekennzeichnet, daß sie als Monomere B) Allylsulfonsäure, Methallylsulfonsäure, Acrylamidomethylpropansulfonsäure, Vinylsulfonsäure, Sulfatoethyl(meth)acrylat, Vinylphosphonsäure und/oder die Salze dieser Säuren mit einwertigen Kationen enthalten.

4. Verfahren zur Herstellung von Pfropf-Copolymerisaten nach einem oder mehreren Ansprüchen 1 bis 3, dadurch gekennzeichnet, daß die Polymerisation in Lösung oder Suspension bei Temperaturen bis 200 °C mittels radikalischer Polymerisationsinitiatoren durchgeführt wird.

5. Verwendung der Pfropfcopolymerisate nach Ansprüchen 1 bis 3 zur Bindung von mehrwertigen Metallionen.

6. Verwendung der Pfropfcopolymerisate nach Ansprüchen 1 bis 3 zur Inhibierung der Wasserhärte.

7. Verwendung der Pfropfcopolymerisate nach Ansprüchen 1 bis 3 als Zusatz und Kornponente in Wasch- und Reinigungsmitteln.

8. Verwendung der Pfropfcopolymerisate nach Ansprüchen 1 bis 3 als Zusatz und Komponente in Waschflotten.

9. Verwendung der Pfropfcopolymerisate nach Ansprüchen 1 bis 3 als Hilfsmittel bei der Textilveredlung.

10. Verwendung der Pfropfcopolymerisate nach Ansprüchen 1 bis 3 als Hilfsmittel bei der Vorbehandlung von Faserrohstoffen oder Textilmaterialien.

11. Verwendung der Pfropfcopolymerisate nach Ansprüchen 1 bis 3 als Hilfsmittel zum Abkochen, Beuchen und Bleichen von Faserrohstoffen, Fasern und Textilmaterialien.

12. Verwendung der Pfropfcopolymerisate nach Ansprüchen 1 bis 3 als Hilfsmittel beim Färben von natürlichen und/oder synthetischen Fasern oder Textilmaterialien.

13. Verwendung der Pfropfcopolymerisate nach Ansprüchen 1 bis 3 als Hilfsmittel beim Textildruck, vorzugsweise bei der Nachwäsche von Reaktivdrucken und Echtfärbungen von natürlichen und/oder synthetischen Fasern oder Textilmaterialien

14. Verwendung der Pfropfcopolymerisate nach Ansprüchen 1 bis 3 als Hilfsmittel beim Entschlichten von natürlichen oder synthetischen Fasern oder Textilmaterialien

15. Verwendung nach Ansprüchen 9 bis 14, dadurch gekennzeichnet, daß die Pfropfcopolymerisate in Kombination mit Tensiden eingesetzt werden.

16. Verwendung nach Anspruch 15, dadurch gekennzeichnet, daß die Pfropfcopolymerisate in Kombination mit anionischen Tensiden eingesetzt werden.

17. Verwendung nach Ansprüchen 9 bis 15, dadurch gekennzeichnet, daß die Pfropfcopolymerisate in Kombination mit komplexbildenden Carbonsäuren eingesetzt werden.

18. Verwendung nach Ansprüchen 10 bis 11, 15 bis 17 dadurch gekennzeichnet, daß die Pfropfcopolymerisate zum chloritfreien Bleichen, vorzugsweise in mehrstufigen Verfahren in einem veränderbaren Behandlungsbad oder in solchen Continue-Prozessen eingesetzt werden.

19. Verwendung der Pfropfcopolymerisate nach Ansprüchen 1 bis 3 zur Herstellung von Pigment- und Farbstoffdispersionen.

20. Verwendung der Pfropfcopolymeriste nach Ansprüchen 1 bis 3 als Hilfsmittel bei der Papierherstellung.

21. Verwendung nach Anspruch 20, dadurch gekennzeichnet, daß die Pfropfcopolymerisate zur Herstellung von Pigment- und Füllstoffdispersionen oder von Streichfarben verwendet werden.

22. Verwendung der Pfropfcopolymerisate nach Ansprüchen 1 bis 3 als Hilfsmittel bei der Lederherstellung.

## Claims

1. Graft copolymers which can be obtained by free-radical graft copolymerization of from 40 to 95 wt.-% of a mixture of the monomer components A) through E) and from 5 to 60 wt.-% of monosaccharides, disaccharides, oligosaccharides, or sorbitol, mannitol, gluconic acid, glucuronic acid, alkyl glycosides, alkyl, hydroxyalkyl, or carboxyalkyl ethers as reaction products or derivatives of these saccharides or mixtures thereof, said monomer mixture consisting of:
A) from 36.95 to 96 wt.-% of at least one monoethylenically unsaturated C₃-C₁₀ monocarboxylic acid and/or salt thereof with a univalent cation, or mixtures of monoethylenically unsaturated C₃-C₁₀ monocarboxylic acids and/or salts thereof with univalent cations;
B) from 4 to 55 wt.-% of at least one monoethylenically unsaturated monomer containing sulfonic acid groups, monoethylenically unsaturated sulfuric acid ester and/or vinylphosphonic acid and/or salts thereof with univalent cations;
C) from 0 to 30 wt.-% of at least one water-soluble, monoethylenically unsaturated polyalkylene glycol ether of (meth)allyl alcohol or polyalkylene glycol ester of (meth)acrylic acid which may optionally be end-capped and contains from 2 to 50 mol of alkylene oxide units per mol (meth)acrylic acid or (meth)allyl alcohol;
D) from 0 to 45 wt.-% of at least one other watersoluble compound polymerizable via free radicals, or a compound which either has at least two ethylenically unsaturated double bonds or one ethylenically unsaturated double bond and another functional group having a crosslinking effect;
E) from 0 to 30 wt.-% of alkyl and/or hydroxylalkyl (meth)acrylic acid esters, maleic acid mono- and/or dialkyl esters, N-alkyl- and/or N,N'-dialkyl(meth)acrylamides and/or vinylcarboxylic acid esters which are sparingly soluble or insoluble in water and polymerizable via free radicals;
and wherein the sum of A through E amounts to 100 wt.-%.

2. The graft copolymers of claim 1, characterized in that they contain acrylic and/or methacrylic acid, the alkali/ammonium and/or amine salts thereof as monomers A).

3. The graft copolymers of claim 1, characterized in that they contain allylsulfonic acid, methallylsulfonic acid, acrylamidomethylpropanesulfonic acid, vinylsulfonic acid, sulfatoethyl (meth)acrylate, vinylphosphonic acid, and/or salts of these acids with univalent cations as monomers B).

4. A process for producing the graft copolymers according to one or more of claims 1-3, characterized in that the polymerization is performed in solution or suspension at temperatures up to 200°C using free-radical polymerization initiators.

5. Use of the graft copolymers according to claims 1-3 for binding multivalent metal ions.

6. Use of the graft copolymers according to claims 1-3 for inhibiting water hardness.

7. Use of the graft copolymers according to claims 1-3 as additive and component in detergents and cleaners.

8. Use of the graft copolymers according to claims 1-3 as additive and component in washing baths.

9. Use of the graft copolymers according to claims 1-3 as auxiliary agents in textile finishing.

10. Use of the graft copolymers according to claims 1-3 as auxiliary agents in the pretreatment of fiber raw materials or textile materials.

11. Use of the graft copolymers according to claims 1-3 as auxiliary agents in boiling, bucking and bleaching of fiber raw materials, fibers, and textile materials.

12. Use of the graft copolymers according to claims 1-3 as auxiliary agents for dyeing natural and/or synthetic fibers or textile materials.

13. Use of the graft copolymers according to claims 1-3 as auxiliary agents in textile printing, particularly in rewashing reactive printings and fast dyeings of natural and/or synthetic fibers or textile materials.

14. Use of the graft copolymers according to claims 1-3 as auxiliary agents for desizing natural or synthetic fibers or textile materials.

15. The use according to claims 9-14, characterized in that the graft copolymers are used in combination with surfactants.

16. The use according to claim 15, characterized in that the graft copolymers are used in combination with anionic surfactants.

17. The use according to claims 9-15, characterized in that the graft copolymers are used in combination with complexing carboxylic acids.

18. The use according to claims 10-11 and 15-17, characterized in that the graft copolymers are used in chlorite-free bleaching, preferably in multi-step processes in a modifiable treatment bath or in such continuous processes.

19. Use of the graft copolymers according to claims 1-3 in the production of dispersions of pigments and dyes.

20. Use of the graft copolymers according to claims 1-3 as auxiliary agents in paper manufacturing.

21. The use according to claim 20, characterized in that the graft copolymers are used in the production of pigment and filler dispersions, or coatings.

22. Use of the graft copolymers according to claims 1-3 as auxiliary agents in leather manufacturing.

## Revendications

1. Copolymères blocs pouvant être obtenus par copolymérisation radicalaire de greffage de 40 à 95% en poids d'un mélange des composants monomères A) à E) et 5 à 60% en poids de monosaccharides, disaccharides, oligosaccharides ou de sorbitol, mannitol, acide gluconique, acide glucuronique, alkylglycosides, alkyléthers, hydroxyalkyléthers ou carboxyalkyléthers comme produits de réaction et/ou dérivés des saccharides ou des mélanges de ceux-ci, le mélange de monomères étant constitué de:
A) 36,95 à 96% en poids au moins d'un acide monocarboxylique en C₃ à C₁₀ monoéthyléniquement insaturé et/ou d'un de ses sels avec un cation monovalent, ou de mélanges d'acides monocarboxyliques en C₃ à C₁₀ monoéthyléniquement insaturés et/ou de leurs sels avec des cations monovalents,
B) 4 à 55% en poids au moins d'un monomère monoéthyléniquement insaturé contenant des groupes acide sulfonique, d'un ester d'acide sulfurique monoéthyléniquement insaturé et/ou d'acide vinylsulfonique et/ou de ses sels avec des cations monovalents;
C) 0 à 30% en poids au moins d'un poly(éther d'alkylène glycol) soluble dans l'eau et monoéthyléniquement insaturé d'alcool (méth)allylique, ou un ester de polyalkylène glycol de l'acide (méth)acrylique, qui peut éventuellement être à terminaison bloquée et contient de 2 à 50 moles d'unités d'oxyde d'alkylène par mole d'acide (méth)acrylique ou d'alcool (méth)acrylique;
D) 0 à 45% en poids au moins d'un autre composé soluble dans l'eau, polymérisable par voie radicalaire, ou d'un composé contenant au moins deux doubles liaisons éthyléniquement insaturées ou une double liaison éthyléniquement insaturée et un autre groupe fonctionnel réticulant;
E) 0 à 30% en poids d'un monoester maléique et/ou d'un dialkylester, d'un ester hydroxyalkyl(méth)acrylique et/ou d'un alkyle polymérisable par voie radicalaire, insoluble ou peu soluble dans l'eau, d'un N-alkyl- et/ou N-N'-dialkyl(méth)acrylamide et/ou d'un ester vinylcarboxylique, la somme de A à E étant égale à 100%.

2. Copolymères blocs selon la revendication 1, caractérisés en ce qu'ils contiennent en tant que monomères A) de l'acide acrylique et/ou méthacrylique, leurs sels de métal alcalin/ammonium ou leurs sels d'amine.

3. Copolymères blocs selon la revendication 1, caractérisés en ce qu'ils contiennent en tant que monomères B) de l'acide allylsulfonique, de l'acide méthallylsulfonique, de l'acide acrylamidométhylpropanesulfonique, de l'acide vinylsulfonique, du (méth)acrylate de sulfatoéthyle, de l'acide vinylphosphonique et/ou les sels de ces acides avec des cations monovalents.

4. Procédé de préparation de copolymères blocs selon une ou plusieurs des revendications 1à 3, caractérisé en ce que la polymérisation est entreprise en solution ou en suspension, à une température de 200°C et au moyen d'initiateurs de polymérisation de type radicalaire.

5. Utilisation des copolymères blocs selon les revendications 1 à 3 pour la fixation d'ions métalliques multivalents.

6. Utilisation des copolymères blocs selon les revendications 1 à 3 comme inhibiteurs de la dureté de l'eau.

7. Utilisation des copolymères blocs selon les revendications 1 à 3 comme additifs et composants dans des produits de lavage et de nettoyage.

8. Utilisation des copolymères blocs selon les revendications 1 à 3 comme composants dans des bains de lavage.

9. Utilisation des copolymères blocs selon les revendications 1 à 3 comme adjuvants dans l'ennoblissement des textiles.

10. Utilisation des copolymères blocs selon les revendications 1 à 3 comme adjuvants lors du prétraitement de matières premières pour fibres ou textiles.

11. Utilisation des copolymères blocs selon les revendications 1 à 3 comme adjuvants pour le débouillissage, le lessivage et le blanchiment de matières premières fibreuses, de fibres et de textiles.

12. Utilisation des copolymères blocs selon les revendications 1 à 3 comme adjuvants pour la coloration de matières textiles ou de fibres naturelles et/ou synthétiques.

13. Utilisation des copolymères blocs selon les revendications 1 à 3 comme adjuvants dans l'impression de textiles, de préférence lors du post-lavage d'impressions réactives et de colorations grand teint de matières textiles ou de fibres naturelles et/ou synthétiques.

14. Utilisation des copolymères blocs selon les revendications 1 à 3 comme adjuvants dans le désensimage de matières textiles ou de fibres naturelles ou synthétiques.

15. Utilisation selon les revendications 9 à 14, caractérisée en ce que les copolymères blocs sont mis en oeuvre avec des agents tensioactifs.

16. Utilisation selon la revendication 15, caractérisée en ce que les copolymères blocs sont mis en oeuvre avec des agents tensioactifs anioniques.

17. Utilisation selon les revendications 9 à 15, caractérisée en ce que les copolymères blocs sont mis en oeuvre en combinaison avec des acides carboxyliques complexants.

18. Utilisation selon les revendications 10 à 11, 15 à 17, caractérisée en ce que les copolymères blocs sont utilisés pour le blanchiment sans chlorures, de préférence dans un procédé en plusieurs étapes, dans un bain de traitement modifiable, ou dans des procédés continus similaires.

19. Utilisation des copolymères blocs selon les revendications 1 à 3 pour la préparation de dispersions de pigments ou de colorants.

20. Utilisation des copolymères blocs selon les revendications 1 à 3 comme adjuvants dans la fabrication du papier.

21. Utilisation selon la revendication 20, caractérisée en ce que les copolymères blocs sont utilisés pour la préparation de dispersions de pigments et de charges ou de couleurs de couchage.

22. Utilisation des copolymères blocs selon les revendications 1 à 3 comme adjuvants dans la fabrication des cuirs.
